(19)

**Europäisches Patentamt**

**European Patent Office**

**Office européen des brevets**

(11)  **EP 2 639 260 A1**

(12) **EUROPEAN PATENT APPLICATION**

| | |
|---|---|
| (43) Date of publication:<br>**18.09.2013 Bulletin 2013/38** | (51) Int Cl.:<br>**C08J 9/12** (2006.01)  **C08J 9/14** (2006.01)<br>**C08L 25/06** (2006.01)  **C08L 25/14** (2006.01) |
| (21) Application number: **13158154.8** | |
| (22) Date of filing: **07.03.2013** | |

| | |
|---|---|
| (84) Designated Contracting States:<br>**AL AT BE BG CH CY CZ DE DK EE ES FI FR GB GR HR HU IE IS IT LI LT LU LV MC MK MT NL NO PL PT RO RS SE SI SK SM TR**<br>Designated Extension States:<br>**BA ME** | (72) Inventors:<br>• **Okuda, Akira**<br> **Tochigi, 322-0014 (JP)**<br>• **Ishikawa, Tatsuyuki**<br> **Tochigi, 322-0014 (JP)**<br>• **Kogure, Naochika**<br> **Tochigi, 322-0014 (JP)** |
| (30) Priority: **16.03.2012 JP 2012061093** | |
| (71) Applicant: **JSP CORPORATION**<br>**Tokyo 100-0005 (JP)** | (74) Representative: **Wagner, Matthias**<br>**Müller-Gerbes Wagner Albiger**<br>**Patentanwälte**<br>**Friedrich-Breuer-Strasse 72-78**<br>**53225 Bonn (DE)** |

(54) **Method for producing extruded polystyrene resin heat-insulating foam board**

(57)  A method for producing an extruded heat-insulating foam board having a thickness of 10 to 150 mm, an apparent density of 20 to 50 kg/m³ and a closed cell content of at least 80% by extrusion foaming of a foamable resin melt containing a base resin composed primarily of a polystyrene resin, a physical blowing agent and a flame retardant, wherein 3 to 50 mol% of a hydrofluoroolefin, 30 to 70 mol% of a saturated hydrocarbon having 3 to 5 carbon atoms, and 5 to 50 mol% of water and/or carbon dioxide (where the sum of the contents of the hydrofluoroolefin, saturated hydrocarbon having 3 to 5 carbon atoms, water and / or carbon dioxide is 100 mol%) are used as the physical blowing agent. The extruded polystyrene resin heat-insulating foam board is produced with good extrusion foamability and moldability and has a high expansion ratio, a large thickness, excellent long-term heat-insulating properties and flame retardancy, and good appearance.

EP 2 639 260 A1

**Description**

BACKGROUND OF THE INVENTION

Field of the invention

The present invention relates to a method for producing an extruded polystyrene resin heat-insulating foam board having low thermal conductivity, excellent heat-insulating properties over a long period of time, high flame retardancy, and good appearance. The present invention also relates to a method for producing an extruded polystyrene resin heat-insulating foam board useful as a heat-insulating material for walls, floors, roofs and so on of buildings or constructions.

Description of the Rerated art

Extruded polystyrene resin foams have excellent heat-insulating properties and mechanical strength, therefore, are widely used in the form of board-shaped molded articles as a heat-insulating material and so on. Such a heat-insulating foam board is usually produced by melting and kneading a polystyrene resin together with a physical blowing agent in an extruder to prepare a foamable molten resin kneaded mixture and extruding the mixture into a low pressure region through a flat die attached to the downstream end of the extruder to allow the mixture to foam and expand.

As the physical blowing agent used in the production of an extruded polystyrene resin heat-insulating foam board as described above, chlorofluorohydrocarbons (hereinafter referred to as "CFCs"), such as dichlorodifluoromethane, have been widely used. Because CFCs have a high risk of destroying the ozone layer, CFCs are being replaced by hydrochlorofluorocarbons (hereinafter referred to as "HCFCs"), which contain hydrogen atoms in the molecules and which has a relatively low ozone depletion potential (ODP). However, HCFCs do not have an ozone depletion potential of 0 (zero) and therefore is not completely free of a risk of destroying the ozone layer. In recent years, the use of hydrofluorocarbons (hereinafter referred to as "HFCs") having an ozone depletion potential of 0 (zero) and containing no chlorine atoms in the molecules as blowing agents has been considered.

However, HFCs are preferred in terms of having an ozone depletion potential of 0 (zero) but still have room for improvement in terms of protection of the global environment as HFCs have a high global warming potential.

Thus, various environmentally- friendly blowing agents having an ozone depletion potential (ODP) of 0 (zero) and a low global warming potential (GWP) are under consideration. In recent years, the use of a fluorinated olefin (i.e, hydrofluoroolefin, hereinafter referred to as "HFO") as a blowing agent was proposed in JP- A- 2010- 522808. JP- A- 2010- 522808 discloses an alkenyl aromatic polymer foam produced by a method including softening polystyrene in an extruder, mixing the softened polystyrene with a blowing agent to prepare a foamable composition, and extruding the foamable composition through a die at a foaming temperature to form a foamed article. The blowing agent contains at least one fluorinated alkene and at least one selected from carbon dioxide and water.

When a base resin composed primarily of a polystyrene resin is subjected to extrusion foaming using an HFO as a blowing agent as disclosed in JP- A- 2010- 522808, however, it has not been possible to fully achieve the objective of obtaining a heat- insulating foam board having a large thickness, a high closed cell content, good appearance, and excellent heat- insulating characteristics, in particular, an excellent long- term heat- insulating properties.

SUMMARY OF THE INVENTION

It is, therefore, an object of the present invention to provide a method for producing an extruded polystyrene resin heat-insulating foam board having a low thermal conductivity, excellent long-term heat-insulating properties and flame retardancy, a large thickness, a high expansion ratio and good appearance using a physical blowing agent having an ozone depletion potential (ODP) of zero or close to zero and a low global warming potential (GWP).

The gist of the present invention resides in the following (1) to (4);

(1) A method for producing an extruded heat-insulating foam board having a thickness of 10 to 150 mm, an apparent density of 20 to 50 kg / $m^3$ and a closed cell content of at least 80%, comprising subjecting a foamable resin melt containing a base resin composed primarily of a polystyrene resin, a physical blowing agent and a flame retardant to extrusion foaming, wherein a blowing agent containing 3 to 50 mol% of a hydrofluoroolefin, 30 to 70 mol% of a saturated hydrocarbon having 3 to 5 carbon atoms, and 5 to 50 mol% of water and / or carbon dioxide (where the sum of the contents of the hydrofluoroolefin, saturated hydrocarbon having 3 to 5 carbon atoms, water and / or carbon dioxide is 100 mol%) is used as the physical blowing agent.

(2) The method for producing an extruded polystyrene resin heat-insulating foam board according to above (1), wherein the sum of the amounts of the hydrofluoroolefin and the saturated hydrocarbon having 3 to 5 carbon atoms is 0.4 to 2 moles per 1 kg of the base resin, and the sum of the amounts of the water and/or carbon dioxide is 0.05 to 0.6 moles per 1 kg of the base resin.

(3) The method for producing an extruded polystyrene resin heat-insulating foam board according to above (1), wherein the hydrofluoroolefin is a tetrafluoropropene.

(4) The method for producing an extruded polystyrene resin heat- insulating foam board according to claim1, wherein the hydrofluoroolefin (HFO) is at least one selected from the group consisting of trans- 1, 3, 3, 3- tetrafluoropropene (trans- HFO- 1234ze) , cis- 1, 3, 3, 3- tetrafluoropropene (cis- HFO- 1234ze) and 2, 3, 3, 3- tetrafluoropropene (HFO- 1234yf) .

Effect of the Invention

In the present invention, an extruded polystyrene resin heat-insulating foam board is produced by extrusion foaming of a foamable resin melt containing, as a physical blowing agent, a mixed blowing agent containing a hydrofluoroolefin (HFO), a saturated hydrocarbon having 3 to 5 carbon atoms, and water and/or carbon dioxide at a specific mixing ratio. By this expedience, an extruded polystyrene resin heat-insulating foam board having a high expansion ratio, a large thickness, excellent long-term heat-insulating properties and flame retardancy and good appearance can be obtained with good extrusion foamability and moldability. Further, because the obtained heat-insulating foam board has a high closed cell content, the HFO used as a blowing agent is less likely to dissipate from the heat-insulating foam board and maintains its heat-insulating properties for a long period of time. In addition, even when an HFO having a relatively low solubility in a polystyrene resin is used, the use of a mixed blowing agent having a mixing ratio as described above allows the HFO to be uniformly mixed in the base resin. As a consequence, a heat-insulating foam board having a high expansion ratio, good appearance and a large thickness is obtainable.

Description of the Preferred Embodiments

The present invention relates to a method for producing a polystyrene resin heat-insulating foam board by extrusion foaming of a foamable resin melt containing a base resin composed primarily of a polystyrene resin, a physical blowing agent and a flame retardant.

A method for producing an extruded polystyrene resin heat-insulating foam board according to the present invention is a method for producing an extruded heat-insulating foam board having a thickness of 10 to 150 mm, an apparent density of 20 to 50 kg/m$^3$ and a closed cell content of at least 80% by extrusion foaming of a foamable resin melt containing a base resin composed primarily of a polystyrene resin, a physical blowing agent and a flame retardant. The method of the present invention is characterized by the use of a mixture of 3 to 50 mol% of a hydrofluoroolefin, 30 to 70 mol% of a saturated hydrocarbon having 3 to 5 carbon atoms, and 5 to 50 mol% of water and/or carbon dioxide (where the sum of the contents of the hydrofluoroolefin, saturated hydrocarbon having 3 to 5 carbon atoms, water and/or carbon dioxide is 100 mol%) as the physical blowing agent.

(I) Physical blowing agent (C)

In the production method of the present invention, a physical blowing agent (C) containing, as one of the components thereof, a hydrofluoroolefin (occasionally referred to as "HFO") (referred to as C1) which is highly effective in lowering the thermal conductivity of the resulting extruded polystyrene resin heat-insulating foam board is used. The blowing agent (C) also contains a saturated hydrocarbon having 3 to 5 carbon atoms (referred to as C2), and water and/or carbon dioxide (referred to as C3). In this case, the combined use of the blowing agent components at a specific mixing ratio described later is important to achieve the intended objective of the present invention. Specifically, there may be mentioned a mixed blowing agent containing an HFO, a saturated hydrocarbon having 3 to 5 carbon atoms and water, a mixed blowing agent containing an HFO, a saturated hydrocarbon having 3 to 5 carbon atoms and carbon dioxide, and a mixed blowing agent containing an HFO, a saturated hydrocarbon having 3 to 5 carbon atoms, water and carbon dioxide.

The physical blowing agent is a mixed physical blowing agent containing 3 to 50 mol% of an HFO, 30 to 70 mol% of a saturated hydrocarbon having 3 to 5 carbon atoms, and 5 to 50 mol% of water and/or carbon dioxide, where the sum of the contents of the HFO, saturated hydrocarbon having 3 to 5 carbon atoms, and water and/or carbon dioxide is 100 mol%.

Specific examples of the hydrofluoroolefin (HFO) used in the present invention include tetrafluoropropenes such as trans- 1, 3, 3, 3- tetrafluoropropene (trans- HFO- 1234ze) , cis- 1, 3, 3, 3- tetrafluoropropene (cis- HFO- 1234ze) and 2, 3, 3, 3- tetrafluoropropene (HFO- 1234yf) . These blowing agents may be used singly or in combination of two or more.

The HFO not only has an ozone depletion potential of zero or close to zero and a very low global warming potential but also has a low thermal conductivity of the gas state and is non-flammable. Thus, when the HFO is used as a physical blowing agent, ignition of the foam board by static electricity during production can be prevented to reduce the risk of fire. In addition, because the flame retardancy of the resulting heat-insulating foam board can be improved relatively easily, the amount of a flame retardant can be reduced compared to conventional articles. As a result, the influence of the flame retardant on the expansion moldability of the foamable resin melt during extrusion foaming thereof can be reduced to improve the expansion moldability of the foamable resin melt.

An HFO having relatively high solubility in a polystyrene resin and high compatibility with a polystyrene resin has been hitherto used as a blowing agent for producing a polystyrene resin foam. Thus, an extruded foamed article having a high expansion ratio is obtainable when an HFO which can be added in a large amount to a polystyrene resin and have excellent foaming property is used as a blowing agent. On the other hand, such an HFO easily dissipates from the resulting foam.

Tetrafluoropropenes (HFO- 1234ze, HFO- 1234yf, etc.) have low solubility in a polystyrene resin and low compatibility with a polystyrene resin. When a large amount of such a tetrafluoropropene is added as a blowing agent to a polystyrene resin in order to obtain a heat- insulating foam board having a high expansion ratio, the tetrafluoropropene may be separated from the foamable resin melt containing the blowing agent during extrusion foaming thereof. As a result, local large recesses (hereinafter referred to as "spot holes") are apt to be formed in surfaces of the resulting heat-insulating foam board, which impairs the appearance of the heat- insulating foam board. In addition, when a heat-insulating foam board having a large thickness is produced, the closed cell content may decrease, resulting in poor long-term heat- insulating properties.

The present invention provides a production method by which a heat-insulating foam board having not only a high closed cell content and a high expansion ratio, in other words, a low density and excellent heat-insulating properties, but also good appearance and a large thickness can be produced even when an HFO having relatively low solubility in a polystyrene resin and low compatibility with a polystyrene resin is used as a blowing agent. According to the present invention, a polystyrene resin heat-insulating foam board having a large thickness, a high expansion ratio, excellent long-term heat-insulating properties and good appearance can be obtained by using a specific mixed blowing agent obtained by mixing an HFO having relatively low solubility in a polystyrene resin and low compatibility with a polystyrene resin with specific amounts of specific physical blowing agents, i.e., a saturated hydrocarbon having 3 to 5 carbon atoms and water and/or carbon dioxide. Further, specifically, blowing agent is composed of the HFO and the saturated hydrocarbon and water, the HFO and the saturated hydrocarbon and carbon dioxide, and the HFO and the saturated hydrocarbon and water and carbon dioxide.

The content of the HFO (C1) in the mixed blowing agent of the present invention is 3 to 50 mol% based on the total amount, which is taken as 100 mol%, of the blowing agent (C1), the saturated hydrocarbon having 3 to 5 carbon atoms (C2) and water and/or carbon dioxide (C3). When the HFO content is too low, the improvement of the heat-insulating properties by the effect of the HFO cannot be expected. When the HFO content exceeds the above range, part of the HFO may be separated from the resin melt during extrusion foaming thereof, resulting in the formation of spot holes in surfaces of the heat-insulating foam board or low closed cell content in the foam board. For these reasons, the content of the HFO (C1) is preferably 5 to 45 mol%, more preferably 10 to 40 mol%.

The amount of the HFO (C1) based on the base resin is preferably 0.05 to 0.7 mole per 1 kg of the base resin. When the amount of the HFO (C1) based on the base resin is in the above range, an effective amount of HFO remains in the cells of the heat-insulating foam board after extrusion foaming, resulting in an extruded heat-insulating foam board having excellent long-term heat-insulating properties. For the above reasons, the amount of the HFO is more preferably 0.1 to 0.6 mole per 1 kg of the base resin.

Examples of the saturated hydrocarbon (C2) having 3 to 5 carbon atoms include hydrocarbons having 3 carbon atoms such as propane, hydrocarbons having 4 carbon atoms such as n- butane and isobutane (=2- methylpropane) , and hydrocarbons having 5 carbon atoms such as n- pentane, isopentane (=2- methyl butane) , neopentane (=2, 2-dimethylpropane) and cyclopentane. These blowing agents may be used singly or in combination of two or more. Above all, hydrocarbons having 4 carbon atoms, such as n- butane and isobutane, are preferred, and isobutane is especially preferred.

The saturated hydrocarbon (C2) having 3 to 5 carbon atoms penetrates through a polystyrene resin at a lower rate than air and has a lower thermal conductivity than air. Thus, the extruded heat-insulating foam board provided by the blowing agent containing the saturated hydrocarbon (C2) has good heat-insulating properties. In addition, the saturated hydrocarbon having 3 to 5 carbon atoms is highly soluble in a polystyrene resin and is effective in plasticizing a polystyrene resin. Thus, the melt viscoelasticity of the foamable resin melt containing the blowing agent is adjusted to a range suitable for foaming, and an extruded heat-insulating foam board having a high expansion ratio, i.e., a low density, can be obtained relatively easily. In addition, even when an HFO having relatively low compatibility with a polystyrene resin is used as a component of the mixed blowing agent, the use of the saturated hydrocarbon having 3 to 5 carbon atoms can compensate for the decrease in expandability. Thus, a polystyrene resin heat-insulating foam board having a high expansion ratio, excellent long-term heat-insulating properties, and good appearance can be obtained.

The content of the saturated hydrocarbon having 3 to 5 carbon atoms is 30 to 70 mol% (where the sum of the contents of the blowing agents (C1), (C2) and (C3) is 100 mol%). When the content is too low, the foamable resin melt may not be plasticized sufficiently. Then, the stability of the foamable resin melt during extrusion foaming thereof may decrease, and the resulting heat-insulating foam board may have poor surface conditions. When the content is too high, on the other hand, the flame retardancy of the heat-insulating foam board may decrease or the risk of ignition of the heat-insulating foam board by static electricity during production may increase. For these reasons, the content of the saturated hydrocarbon having 3 to 5 carbon atoms is preferably 35 to 60 mol%, more preferably 40 to 55 mol% (where the sum of the contents of the physical blowing agents (C1), (C2) and (C3) is 100 mol%).

The amount of the saturated hydrocarbon having 3 to 5 carbon atoms based on the base resin is preferably 0.05 mole to 0.8 mole per 1 kg of the base resin. When the amount of the saturated hydrocarbon having 3 to 5 carbon atoms based on the base resin is in the above range, an extruded heat-insulating foam board having an excellent long-term heat-insulating properties and good appearance can be produced without impairing the flame retardancy of the heat-insulating foam board after extrusion foaming. The amount of the saturated hydrocarbon having 3 to 5 carbon atoms based on the base resin is more preferably 0.1 to 0.7 mole per 1 kg of the base resin.

In the production method of the present invention, the physical blowing agent also contains 5 to 50 mol% of water and / or carbon dioxide (C3). The water and/or carbon dioxide can provide a high expansion ratio as an inorganic physical blowing agent without impairing the flame retardancy of the resulting extruded heat-insulating foam board. In addition, because water and carbon dioxide penetrates through a polystyrene resin at an early stage when in the form of gas, the water and/or carbon dioxide dissipate from the extruded heat-insulating foam board at an early stage. Thus, the dimensional change, heat-insulating performance and flame retardant performance of the heat-insulating foam board can be stabilized at an early stage

When the content of the water and/or carbon dioxide is too low, the expansion ratio may not be improved. When the content of the water and/or carbon dioxide is too high, the water and/or carbon dioxide may be separated from the resin melt during extrusion foaming thereof because water and/or carbon dioxide have relatively low compatibility with a polystyrene resin as a base resin and the resulting extruded heat-insulating foam board may have uneven surfaces (spot holes on the surface). For these reasons, the content of water and/or carbon dioxide is preferably 10 to 45 mol%, more preferably 15 to 40 mol%, based on the total amount of the physical blowing agents (C1), (C2) and (C3) taken as 100 mol%.

The total amount of water and/or carbon dioxide is preferably 0.05 to 0.60 moles, more preferably 0.1 to 0.55 moles per 1 kg of the base resin. When the amount of water and/or carbon dioxide is in the above range, the water and / or carbon dioxide has sufficiently good compatibility with the base resin so that a heat-insulating foam board having good appearance can be obtained.

Water is preferred because it has a low molecular weight and provides a high expansion efficiency and, therefore, can further reduce the apparent density of the extruded heat-insulating foam board. In addition, water is preferred in terms of improvement of the extrusion foamability and moldability of the foamable resin melt because it can widen the temperature range suitable for extrusion foaming of the foamable resin melt.

According to the present invention, a heat-insulating foam board having a large thickness, a high expansion ratio (i. e, low density), excellent long-term heat-insulating properties and good appearance can be obtained by extrusion foaming using a mixed physical blowing agent in which the physical blowing agents (C1), (C2) and (C3) as described above are present at a specific mixing ratio as described above. The blowing agent (C1), HFO, can improve the long-term heat-insulating properties, the blowing agent (C2), saturated hydrocarbon, improves particularly the extrusion expandability of the foamable resin melt by plasticizing the base resin, and the blowing agent (C3), water and/or carbon dioxide, contributes to increasing the expansion ratio and maintaining the dimensional stability of the resulting heat-insulating foam board. In other words, in the present invention, the contents of the above blowing agents (C1), (C2) and (C3) are associated with each other to produce the high-performance heat-insulating foam board intended in the present invention.

For the above reasons, the sum of the amounts of the blowing agent (C1), hydrofluoroolefin, and the blowing agent (C2), saturated hydrocarbon having 3 to 5 carbon atoms, is preferably 0.4 to 2 mole, more preferably 0.5 to 2 mole, still more preferably 0.7 to 2 mole, per 1 kg of the base resin. It is not necessary that all the physical blowing agents (C1), (C2) and (C3) should be simultaneously mixed with the base resin as long as the molten resin kneaded mixture just before extrusion foaming contains the physical blowing agents (C1), (C2) and (C3).

The extruded polystyrene resin heat-insulating foam board preferably has a thermal conductivity (A) of 100 days after production of 0.0290 W / (m.K) or lower, more preferably 0.0280 W / (m.K) or lower. Because the heat-insulating foam board produced by the production method of the present invention has high closed cell content, the dissipation of the HFO from the heat-insulating foam board is prevented effectively. Thus, the heat-insulating foam board has a low thermal conductivity even after elapsed 100 days pass after the production.

In addition, the heat-insulating foam board obtained by the production method of the present invention has especially high closed cell content and therefore has a low thermal conductivity (B) of 200 days after production. In other words, the heat-insulating foam board is excellent in long-term heat-insulating properties.

From the viewpoint of long-term heat-insulating properties, the ratio (B/A) of the thermal conductivity (B) of 200 days after production to the thermal conductivity (A) of 100 days after production (i.e., thermal conductivity (B) of 200 days after production / thermal conductivity (A) of 100 days after production) of the heat-insulating foam board is preferably lower than 1.04, more preferably 1.03 or lower. Because the thermal conductivity preferably does not increase from the viewpoint of long-term heat-insulating properties, the lower limit of the ratio (B/A) is basically 1.00.

The mixed physical blowing agent may contain other blowing agents in addition to the above-described components ((C1), (C2) and (C3)) as long as the intended effects of the present invention are not adversely affected. Examples of such other blowing agents include alkyl chlorides, alcohols, ethers, ketones and esters. Among these blowing agents, alkyl chlorides having 1 to 3 carbon atoms, aliphatic alcohols having 1 to 4 carbon atoms, ethers having an alkyl chain having 1 to 3 carbon atoms, and esters such as methyl formate are preferred as a blowing agent. Examples of the alkyl chlorides having 1 to 3 carbon atoms include methyl chloride and ethyl chloride. Examples of the aliphatic alcohols having 1 to 4 carbon atoms include methanol, ethanol, propyl alcohol, isopropyl alcohol, butyl alcohol, sec-butyl alcohol, tert-butyl alcohol, aryl alcohol, crotyl alcohol and propargyl alcohol. Examples of the ethers having an alkyl chain having 1 to 3 carbon atoms include dimethyl ether, ethyl methyl ether, diethyl ether and methylene dimethyl ether. In particular, methyl chloride, dimethyl ether, methanol and ethanol are preferred because improvement of the expansion ratio can be expected. These blowing agents may be incorporated into the mixed physical blowing agent singly or in combination of two or more.

The total amount of the blowing agents based on the base resin is selected as appropriate based on the desired expansion ratio (i.e., apparent density). To obtain a heat-insulating foam board having an apparent density of 20 to 50 $kg/m^3$, the total amount of the blowing agent is generally about 0.4 to 3 moles, preferably 0.5 to 2.5 moles, per 1 kg of the base resin.

(II) Base resin

The base resin for the extruded heat-insulating foam board of the present invention is composed primarily of a polystyrene resin. As used herein, "being composed primarily of a polystyrene resin" means that the polystyrene resin is contained in the base resin in an amount of at least 50% by weight, preferably at least 70% by weight, more preferably at least 80% by weight.

(i) Polystyrene resin

Examples of the polystyrene resin for use in the present invention include styrene homopolymer, and copolymers composed primarily of styrene, such as styrene-acrylic acid ester copolymer, styrene-methacrylic acid ester copolymer, styrene-acrylic acid copolymer, styrene-methacrylic acid copolymer, styrene-maleic anhydride copolymer, styrene-polyphenylene ether copolymer, styrene-butadiene copolymer, styrene-acrylonitrile copolymer, acrylonitrile-butadiene-styrene copolymer, acrylonitrile-styrene-acrylic acid copolymer, styrene-methylstyrene copolymer, styrene-dimethylstyrene copolymer, styrene-ethylstyrene copolymer, styrene-diethylstyrene copolymer and high-impact polystyrene (HIPS). When any of the above copolymers is used, the styrene component content in the polystyrene resin is preferably at least 70 mol%, more preferably at least 90 mol%. Among the polystyrene resins, styrene homopolymer is most preferred because the resulting heat-insulating foam board has a good thermal conductivity.

The polystyrene resin for use in the present invention preferably has a melt viscosity ($\eta$) of 500 to 10,000 Pa.s, more preferably 700 to 8,000 Pa.s, especially preferably 1,000 to 6,000 Pa·s at a temperature of 200°C and a shear rate of 100 $sec^{-1}$. When the melt viscosity ($\eta$) of the polystyrene resin is in the above range, the foamable resin melt containing the mixed physical blowing agent has improved extrusion moldability and an extruded heat-insulating foam board having a high expansion ratio can be therefore easily obtained.

(ii) Other resins

The base resin may additionally contain resins other than the polystyrene resin in such an amount that does not impair the intended effects of the present invention. Examples of the additional resins include polyester resin, polyethylene resin, polypropylene resin, styrene-butadiene-styrene block copolymer and hydrogenated products thereof, styrene-isoprene-styrene block copolymer and hydrogenated products thereof, styrene-ethylene copolymer, acrylonitrile-alkyl acrylate-butadiene copolymer and methyl polymethacrylate. These resins may be added singly or in combination of two or more. The content of the resins other than the polystyrene resin in the base resin is less than 50% by weight, more preferably 30% by weight or less.

(III) Flame retardant

As the flame retardant for use in the production of the extruded polystyrene resin heat- insulating foam board of the present invention, a bromine flame retardant is preferred. Examples of the bromine flame retardant include tetrabromobisphenol A, tetrabromobisphenol A- bis (2, 3- dibromopropyl ether) , tetrabromobisphenol A- bis (2- bromoethyl ether) , tetrabromobisphenol A- bis (allyl ether) , tetrabromobisphenol- A- bis (2, 3- dibromo- 2- methylpropyl ether) , tetrabromobisphenol S, tetrabromobisphenol S- bis (2, 3- dibromopropyl ether) , hexabromocyclododecane, tetrabromocyclooctane, tris (2, 3- dibromopropyl) isocyanurate, tribromophenol, decabromodiphenyl oxide, tris (tribromoneopentyl) phosphate, N- 2, 3- dibromopropyl- 4, 5- dibromohexahydrophthalimide, brominated polystyrene, brominated bisphenol ether derivatives, and SBS block polymer. These compounds may be used singly or in combination of two or more. Among the above bromine flame retardants, hexabromocyclododecane, tetrabromocyclooctane, tetrabromobisphenol A- bis (2, 3- dibromopropyl ether) , tetrabromobisphenol- A- bis (2, 3- dibromo- 2- methylpropyl ether) and tris (2, 3- dibromopropyl) isocyanurate are especially preferred because they have high thermal stability and can provide high flame retardancy. These flame retardants may be used singly or in combination of two or more.

The use of a composite flame retardant containing a bromine flame retardant having a 2, 3- dibromo- 2- alkylpropyl structure and one or more other flame retardants is especially preferred in terms of thermal stability. Examples of the bromine flame retardant having a 2, 3- dibromo- 2- alkylpropyl structure include tetrabromobisphenol A- bis (2, 3- dibromo- 2- methylpropyl ether) , tetrabromobisphenol S- bis (2, 3- dibromo- 2- methylpropyl ether) and tetrabromobisphenol F- bis (2, 3- dibromo- 2- methylpropyl ether) . Above all, especially preferred is tetrabromobisphenol A- bis (2, 3- dibromo- 2- methylpropyl ether) .

The amount of the flame retardant in the extruded polystyrene resin heat-insulating foam board is preferably 1 to 10 parts by weight, more preferably 1.5 to 7 parts by weight, still more preferably 2 to 5 parts by weight, based on 100 parts by weight of the base resin for reasons of improvement of the flame retardancy and prevention of a decrease in expandability and mechanical properties.

In addition, in the present invention, a flame retardant aid may be used in combination with the flame retardant for further improvement of the flame retardancy of the extruded heat- insulating foam board. Examples of the flame retardant aid include diphenyl alkanes and diphenyl alkenes such as 2, 3- dimethyl- 2, 3- diphenylbutane, 2, 3- diethyl-2, 3- diphenylbutane, 3, 4- dimethyl- 3, 4- diphenylhexane, 3, 4- diethyl- 3, 4- diphenylhexane, 2, 4- diphenyl- 4- methyl-1- pentene and 2, 4- diphenyl- 4- ethyl- 1- pentene; polyalkylated aromatic compounds such as poly- 1, 4- diisopropylbenzene; aromatic phosphorus compounds such as triphenyl phosphate and cresyl- di- 2, 6- xylenyl phosphate; antimony trioxide; diantimony pentaoxide; ammonium sulfate; zinc stannate; nitrogen- containing cyclic compounds such as cyanuric acid, isocyanuric acid, triallyl isocyanurate, melamine cyanurate, melamine, melam and melem; silicone compounds; inorganic compounds such as boron oxide, zinc borate and zinc sulfide; and phosphorus compounds such as red phosphorus compounds, ammonium polyphosphate, phosphazen and hypophosphites. These compounds may be used singly or in combination of two or more.

The flame retardant aid may be added, based on 100 parts by weight of the base resin, in an amount of 0.05 to 1 part by weight, preferably 0.1 to 0.5 part by weight in the case of a diphenyl alkane or diphenyl alkene, and 0.5 to 5 parts by weight, preferably 1 to 4 parts by weight in the case of other flame retardant aids.

The extruded heat-insulating foam board of the present invention may be generally used as a constructional heat-insulating material. In such a case, the extruded heat-insulating foam board is required to have high flame retardancy which meets the flammability standards for an extruded polystyrene foam insulating board specified in Measurement Method A in Section 5·13·1 of JIS A9511 (2006). In addition, the extruded heat-insulating foam board of the present invention preferably meets the thermal conductivity standards specified in Section 4.2 of JIS A9511 (2006). Thus, the amounts of the HFO and the saturated hydrocarbon having 3 to 5 carbon atoms as physical blowing agents in the present invention are determined to satisfy both the flame retardancy and thermal conductivity requirements.

(IV) Heat insulation improver

In the present invention, a heat insulation improver may be added to the base resin for further improvement of the heat-insulating properties. Examples of the heat insulation improver include fine powder of a metal oxide (such as titanium oxide), a metal (such as aluminum), ceramic, carbon black or graphite; infrared-blocking pigments; and hydrotalcite. These heat insulation improvers may be used singly or in combination of two or more. The amounts of the heat insulation improver is 0.5 to 5 parts by weight, preferably 1 to 4 parts by weight, based on 100 parts by weight of the base resin.

(V) Other additives

In the present invention, various additives, such as a cell controlling agent, a coloring agent such as a pigment or dye, a thermal stabilizer and a filler, may be added to the base resin as necessary. Examples of the cell controlling agent include fine powder of an inorganic material such as talc, kaolin, mica, silica, calcium carbonate, barium sulfate, titanium oxide, aluminum oxide, clay, bentonite and diatomaceous earth, and heretofore known chemical blowing agents such as azodicarbodiamide. Above all, talc, which does not impair the flame retardancy and allows easy control of the cell diameter, is preferred. In particular, the use of talc having a particle size of 0.1 to 20 $\mu$m, preferably 0.5 to 15 $\mu$m, as specified in JIS Z8901 (2006), is preferred. The amount of the cell controlling agent, which depends on the type of the controlling agent and the intended cell diameter, is usually approximately, 0.01 to 8 parts by weight, preferably 0.01 to 5 parts by weight, more preferably 0.05 to 3 parts by weight, based on 100 parts by weight of the base resin.

The physical properties of the extruded polystyrene resin heat-insulating foam board obtained according to the present invention are described below.

(i) Apparent density

The extruded polystyrene resin heat-insulating foam board obtained according to the present invention has an apparent density of 20 to 50 kg / m$^3$. In particular, a heat-insulating foam board having a relatively low apparent density in the above range, in other words, a high expansion ratio can be obtained by the production method of the present invention. An extruded heat-insulating foam board having an apparent density excessively lower than the above range is quite difficult to produce and does not have sufficient mechanical strength for some applications. An extruded heat-insulating foam board having too high an apparent density, on the other hand, does not exhibit sufficient heat-insulating properties unless it has a substantial thickness and is not preferred in terms of lightness in weight either. For these reasons, the heat-insulating foam board preferably has an apparent density of 25 to 40 kg/m$^3$.

(ii) Thickness

The extruded polystyrene resin heat-insulating foam board has a thickness of 10 to 150 mm for its intended use. When the thickness is too small, the resin heat-insulating foam board may not meet the requirement for the heat-insulating properties that are required to be met when the foam board is used as a heat-insulating material. A resin heat-insulating foam board having too large a thickness may be difficult to produce by extrusion molding although it depends on the size of the extruder. The thickness is more preferably 15 to 120 mm for easy handling and production.

(iii) Average cell diameter

The extruded polystyrene resin heat-insulating foam board preferably has an average cell diameter in the thickness direction of 0.5 mm or smaller. When the average cell diameter in the thickness direction is controlled in the above range, an extruded heat-insulating foam board having higher heat-insulating properties can be obtained for reasons of, for example, reduction of infrared transmission thereof although such an effect also depends on the apparent density range thereof. The average cell diameter in the thickness direction is preferably 0.05 to 0.3 mm.

In the present invention, the average cell diameter is measured by the following method. An enlarged microscopic image of a vertical cross-section of the extruded heat-insulating foam board taken along the width direction thereof (a vertical cross-section of the extruded heat-insulating foam board taken perpendicular to the extrusion direction) is prepared for measurement of the average cell diameter in the thickness direction ($D_T$: mm) and the average cell diameter in the width direction ($D_W$: mm) of the extruded heat-insulating foam board. An enlarged microscopic image of a vertical cross-section of the extruded heat-insulating foam board taken along the extrusion direction (a vertical cross-section of the extruded heat-insulating foam board taken along a plane which is parallel to the extrusion direction thereof and divides the extruded heat-insulating foam board into equal halves) is prepared for measurement of the average cell diameter in the extrusion direction ($D_L$: mm) of the extruded heat-insulating foam board. Then, a straight line is drawn in the direction in which the cell diameter is intended to be measured on each enlarged image, and the number of cells intersecting the straight line is counted. Then, the length of the straight line (the length is naturally not the length of the straight line on the enlarged image but the real length of the straight line determined based on the magnification of the image) is divided by the number of counted cells. In this way, the average cell diameter in each direction is obtained.

The methods for measuring the average cell diameters are described in more detail. The average cell diameter in the thickness direction ($D_T$: mm) is obtained as follows. First, enlarged microscopic images of three regions i.e., a central region and both end regions, in a vertical cross-section taken in the width direction are prepared. A straight line is then drawn on each image in the thickness direction of the extruded heat-insulating foam board across the entire thickness, and the average diameter of the cells on each straight line (the length of the straight line divided the number of cells intersecting the straight line) is obtained from the length of the straight line and the number of cells intersecting the straight line. Then, the arithmetic mean of the average diameters in the three regions is defined as the average cell diameter in the thickness direction ($D_T$: mm).

The average cell diameter in the width direction ($D_W$: mm) is obtained as follows. First, enlarged microscopic images of three regions i.e., a central region and both end regions, in a vertical cross-section taken in the width direction are prepared. A straight line having a length of multiplied by the magnification to 3mm is drawn on each image in the width direction so as to divide the thickness of the extruded heat-insulating foam board into equal halves, and the average diameter of the cells on each straight line is obtained from the length of the straight line and the number of cells intersecting the straight line according to the equation (3 mm / (the number of cells intersecting the straight line -1)). Then, the arithmetic mean value of the average diameters in the three regions is defined as the average cell diameter in the width direction ($D_W$: mm).

The average cell diameter in the extrusion direction ($D_L$: mm) is obtained as follows. First, enlarged microscopic images of three regions i.e., a central region and both end regions, in a vertical cross-section taken in the extrusion direction of the extruded heat-insulating foam board along a plane which divides the width of the extruded heat-insulating foam board into equal halves. A straight line having a length of multiplied by the magnification to 3mm is drawn on each image in the extrusion direction so as to divide the thickness of the extruded heat-insulating foam board into equal halves, and the average diameter of the cells on each straight line is obtained from the length of the straight line and the number of cells intersecting the straight line according to the equation (3 mm / (the number of cells intersecting the straight line minus 1)). Then, the arithmetic mean value of the average diameters in the three regions is defined as the average cell diameter in the extrusion direction ($D_L$: mm). The arithmetic mean value of $D_W$ and $D_L$ is defined as the average cell diameter in the horizontal direction ($D_H$: mm).

(iv) Cell deformation ratio

The extruded polystyrene resin heat-insulating foam board of the present invention preferably has a cell deformation ratio of 0.7 to 2.0. The cell deformation ratio used herein is a value calculated by dividing the average cell diameter $D_T$ by the average cell diameter $D_H$ ($D_T/D_H$) (the average cell diameters $D_T$ and $D_H$ are obtained by the above methods). The cells are flattened as the deformation rate is less than 1, and are vertically elongated as the deformation rate is greater than 1. When the cell deformation ratio is too low, the cells are so flat that the heat-insulating foam board may have poor compressive strength. Also, the heat-insulating foam board may have poor dimensional stability because flat cells have a strong tendency to regain a spherical shape. When the cell deformation ratio is too high, since the number of cells in the thickness direction is too small, so that the effect of improving the heat-insulating properties by cell shape is less. For these reasons, the cell deformation ratio is preferably 0.8 to 1.5, more preferably 0.8 to 1.2. An extruded polystyrene resin heat-insulating foam board having a cell deformation ratio in the above range has excellent mechanical strength and further improved heat-insulating properties.

(v) Closed cell content (%)

The extruded polystyrene resin heat-insulating foam board has a closed cell content of at least 80%. When the closed cell content is too low, the long-term heat-insulating properties may be poor because the HFO used as a blowing agent tends to dissipate quickly from the heat-insulating foam board. For this reason, the closed cell content is preferably at least 85%, more preferably at least 90%, still more preferably at least 93%. The closed cell content S (%) is measured using an air comparison pycnometer (such as Air Comparison Pycnometer, model: 930, manufactured by Toshiba Beckmann Inc.) according to Procedure C of ASTM-D2856-70.

The closed cell content of the extruded heat-insulating foam board in the present invention is obtained according to the following equation (1). Cut samples for measurement are cut out of three parts, a central part and both end parts in the width direction, of the extruded heat-insulating foam board, and the closed cell content of each cut sample is obtained. The arithmetic mean value of the closed cell contents in the three parts is employed. Each cut sample is cut out of the extruded heat-insulating foam board so as to have a size of 25 mm in length x 25 mm in width x 20 mm in thickness and have no skin. When the extruded heat-insulating foam board is too thin to cut a sample with a thickness of 20 mm out of it, two pieces of samples (cut samples) cut so as to have a size of, for example, 25 mm in length x 25 mm in width x 10 mm in thickness are stacked on top of each other and used for the measurement.

$$S(\%) = (Vx - W / \rho) \times 100/(VA - W / \rho)\cdots(1)$$

wherein :

Vx: True volume ($cm^3$) of the cut sample measured with an air comparison pycnometer (which corresponds to the sum of the volume of the resin composing the cut sample of the extruded heat-insulating foam board and the entire volume of the closed cells in the cut sample),

VA: Apparent volume ($cm^3$) of the cut sample obtained based on the external dimensions of the cut sample used for the measurement,

W: Total weight (g) of the cut sample used for the measurement, and

p: Density (g / $cm^3$) of the resin composing the extruded heat-insulating foam board.

(vi) Thermal conductivity

The extruded polystyrene resin heat-insulating foam board has a thermal conductivity (A) of 100 days after production of 0.0290 W / (m·K) or lower, more preferably 0.0280 W / (m.K) or lower. The heat-insulating foam board obtained by the production method of the present invention maintains the thermal conductivity at a low level even after elapsed 100 days pass after the production because the heat-insulating foam board has such a high closed cell content that dissipation of the HFO from the heat-insulating foam board is prevented effectively.

In the present invention, the thermal conductivity is measured on a specimen, cut out of the extruded heat-insulating foam board so as to have a size of 200 mm in length x 200 mm in width x 10 mm in thickness and have no skin, according to the flat plate heat-flow meter method (twin-plate flow meter, high temperature side: 38°C, low temperature side: 8°C, average temperature: 23°C) specified in JIS A1412-2 (1999). When a specimen having a thickness of 10 mm cannot be cut out, a plurality (but the smallest possible number) of thin specimens are stacked on top of each other to obtain a specimen having a thickness of 10 mm. For example, when a heat-insulating foam board having a thickness of 28 mm is sliced to a thickness of 10 mm, the measurement value of 100 days after the production of the sliced sample is equivalent to the value at 780 days after the production of the heat-insulating foam board (thickness: 28 mm).

The extruded polystyrene resin heat-insulating foam board preferably has a thermal conductivity (B) of 200 days after production of 0.0290 W / (m.K) or lower, more preferably 0.0280 W / (m.K) or lower. The heat-insulating foam board obtained by the production method of the present invention has a particularly high closed cell content and maintains the thermal conductivity at a low level even after elapsed 200 days pass after the production and, therefore, has excellent long-term heat-insulating properties.

(vii) Residual HFO amount in heat-insulating foam board

The extruded polystyrene resin heat-insulating foam board of the present invention preferably has a residual HFO amount of at least 0.02 moles per 1 kg of the extruded heat-insulating foam board. When the residual HFO amount is in the above range, the extruded heat-insulating foam board has excellent heat-insulating properties because the HFO can be effective in improving the heat-insulating properties. For the above reason, the residual HFO amount is more preferably at least 0.1 mole per 1 kg of the extruded heat-insulating foam board. On the other hand, the upper limit of the residual HFO amount is generally 0.8 mole, preferably 0.7 mole, although it depends on the apparent density of the heat-insulating foam board and so on. The residual HFO amount starts to change immediately after the production but is desired to fall within the above range when the heat-insulating foam board is actually used.

The residual HFO amount in the heat-insulating foam board used herein is a value as measured by an internal standard method using a gas chromatograph. Specifically, a suitable volume of sample is cut out of the extruded heat-insulating foam board and is placed in a sample bottle equipped with a lid together with suitable amounts of toluene and an internal standard substance. After closing the lid, the bottle is shaken sufficiently until the HFO contained in the heat-insulating foam board is dissolved in the toluene. Then, the solution as a measurement sample is subjected to gas chromatography analysis to determine the residual HFO amount in the heat-insulating foam board.

(viii) Melt tension

The melt tension (MT) of the base resin used in the present invention is a value as measured according to ASTM D1238, and may be measured using, for example, CAPILOGRAPH 1D manufactured by Toyo Seiki Seisaku-sho, Ltd. Specifically, a cylinder with a cylinder diameter of 9.55 mm and a length of 350 mm and an orifice with a nozzle diameter of 2.095 mm and a length 8.0 mm are used. The cylinder and the orifice are set at a temperature of 200°C. A required amount of sample is placed in the cylinder and allowed to stand for 4 minutes. Then, the resulting molten resin is extruded from the orifice into a string form at a piston speed of 10 mm/min. The string-shaped product is put around a tension-detecting pulley with a diameter of 45 mm and wound around a winding roller while increasing the take-up speed at a constant rate such that the take-up speed increases from 0 m / min to 200 m/min through a period of 4 minutes to measure the maximum tension immediately before the string-shaped product is broken. The reason for adopting a time period of 4 minutes until the take-up speed reaches 200 m/minute from 0 m /minute is to suppress thermal deterioration of the resin and to improve the reproducibility of the measured values. The above measurement is carried out for ten different samples. From the obtained ten measured maximum values, the largest three values and the smallest three values are extruded. The arithmetic mean of the rest four maximum values is defined as the melt tension (cN).

Examples

The following examples and comparative examples will further illustrate the present invention. It will be understood that these examples are illustrative and not restrictive of the invention.
(1) The raw materials of the base resins used in the examples and comparative examples are shown below.

(i) Base resin

The polystyrene resins used as a base resin are shown in Table 1.
Table 1

| Abbreviation | Type | Melt viscosity at 200°C, 100s$^{-1}$ (Pa·s) | Melt tension at 200°C (cN) |
|---|---|---|---|
| PS1 | Styrene homopolymer | 1,150 | 17 |
| PS2 | Styrene homopolymer | 1,630 | 31 |
| Heat resistant PS | Styrene-methacrylic acid copolymer | 1,960 | 38 |

(ii) Master batch

A talc master batch containing 60% by weight of talc (manufactured by Matsumura Sangyo Co., Ltd., trade name: High Filler #12) was prepared using a polystyrene resin as a base resin and used as a cell controlling agent master batch.
A flame retardant master batch containing a composite flame retardant composed of 50% by weight of tetrabromobisphenol- A- bis (2, 3- dibromo- 2- methylpropyl) ether (SR130 manufactured by DAI- ICHI KOGYO SEIYAKU CO., LTD.) and 50% by weight of tetrabromobisphenol- A- bis (2, 3- dibromo- propyl) ether (SR720 manufactured by DAI- ICHI KOGYO SEIYAKU CO., LTD.) was used for forming a flame retardant master batch. The flame retardant master batch was me added to 5 parts as mixture flame retardant by weight per 100 parts by weight of the whole base resin of the intended extruded polystyrene resin heat- insulating foam board.

(iii) Mixed physical blowing agent

A mixed physical blowing agent was composed of trans- 1, 3, 3, 3- tetrafluoropropene (trans- HFO- 1234ze) as the HFO, isobutane as the saturated hydrocarbon having 3 to 5 carbon atoms and water and/or carbon dioxide at a blending ratio shown in Tables 2 to 4.

(2) The evaluation methods are described below.

(i) Cross-sectional area

The cross-sectional area of a vertical cross-section taken perpendicular to the extrusion direction of the extruded heat-insulating foam board (vertical cross-section taken in the width direction) was defined as the cross-sectional area of the extruded polystyrene resin heat-insulating foam board.

(ii) Appearance

The appearance (expansion moldability) was evaluated based on the following evaluation criteria.
Good: A well-expanded, good-appearance extruded heat-insulating foam board having no wavy patterns or spot holes in the surfaces was able to be obtained stably.
Poor: A good-appearance extruded heat-insulating foam board was not able to be obtained because expansion was so poor that wavy patterns or spot holes were formed in the surfaces.

(iii) Flame retardancy

The extruded heat-insulating foam board immediately after the production was placed in a room maintained at a temperature of 23°C and a relative humidity of 50% and allowed to stand in the room for four weeks. Then, the flame retardancy was measured according to "Measurement Method A" in Section 4.13.1 of JIS A9511 (1995). The measurement was conducted on five specimens (N = 5) cut out of one foam board, and evaluation was made according to the following evaluation criteria.
Excellent: The flame went out within 3 seconds on all the specimens and the average burning time of the five specimens was 2 seconds or shorter.
Good: The flame went out within 3 seconds on all the specimens and the average burning time of the five specimens was longer than 2 seconds and not longer than 3 seconds.
Poor: The average burning time of the five specimens was longer than 3 seconds.

(iv) Closed cell content

The closed cell content is a value measured according to Procedure C of ASTM-D2856-70 on a cut sample cut out of the extruded heat-insulating foam board so as to have a size of 25 mm x 25 mm x 20 mm and have no skin.
The apparent density, average cell diameter in the thickness direction, average cell deformation ratio and thermal conductivity were measured by the methods described above.

Examples 1 to 9 and Comparative Examples 1 to 5

A production apparatus having a first extruder with an inside diameter of 65 mm, a second extruder with an inside diameter of 90 mm and a third extruder with an inside diameter of 150 mm connected in series was used. A blowing agent inlet was provided in the vicinity of the downstream end of the first extruder, and a flat die having a resin outlet (die lip) with a rectangular width-wise cross-section having a size of 1 mm in height and 90 mm in width was connected to the outlet of the third extruder.
In addition, a shaping device (guider) including a pair of upper and lower polytetrafluoroethylene resin plates was set at the resin outlet of the flat die in parallel therewith. The resin, flame retardant (5 parts by weight of the flame retardant master batch) and cell controlling agent (2.5 parts by weight of the cell controlling agent master batch) were fed to the first extruder and the mixture was melted and kneaded at 220°C. Then, the physical blowing agent having a composition shown in Tables 2 to 4 was fed into the melt in an amount shown in Tables 2 to 4 through the blowing agent inlet in the vicinity of the downstream end of the first extruder, whereby a kneaded foamable resin melt was obtained. In Tables 2 to 4, HFO designates trans- 1, 3, 3, 3- tetrafluoropropene (transHFO- 11234ze) and i- Bu designates isobutene. The foamable resin melt was then successively fed into the second extruder and the third extruder to adjust the resin temperature to a resin expanding temperature as shown in Tables 2 to 4 (the resin expanding temperature is the temperature of the foamable resin melt measured at a joint between the extruder and the die) . The foamable resin melt was then extruded into the guider through the die lip at a discharge rate of 50 kg / hr and passed, while allowing it to foam and expand, through the gap between the polytetrafluoroethylene resin plates placed in parallel to each other at a distance in the thickness direction of 28 mm to form the foamable resin melt into a board- like shape, whereby an extruded polystyrene resin heat- insulating foam board was produced. The results of evaluations are shown in Tables 2 to 4.
Table 2

| Example | | | | 1 | 2 | 3 | 4 | 5 |
|---|---|---|---|---|---|---|---|---|
| Resin | Polystyrene resin | Type | - | PS1 | PS1 | PS1 | PS1 | PS1 |
| | Flame retardand master batch | | parts by weight | 5 | 5 | 5 | 5 | 5 |
| | Cell controlling agent master batch | | parts by weight | 2.5 | 2.5 | 2.5 | 2.5 | 2.5 |
| Blowing agent | Feed amount Per1 Kg base resin | HFO | mol/kg | 0.10 | 0.20 | 0.30 | 0.40 | 0.50 |
| | | i-Bu | mol/kg | 0.60 | 0.60 | 0.60 | 0.60 | 0.60 |
| | | Water | mol/kg | 0.50 | 0.40 | 0.30 | 0.20 | 0.10 |
| | | Total | mol/kg | 1.20 | 1.20 | 1.20 | 1.20 | 1.20 |
| | Composition | HFO | mol% | 8 | 17 | 25 | 33 | 42 |
| | | i-Bu | mol% | 50 | 50 | 50 | 50 | 50 |
| | | Water | mol% | 42 | 33 | 25 | 17 | 8 |
| | | Total | mol% | 100 | 100 | 100 | 100 | 100 |
| Production condition | Foaming Temperature of resin | | °C | 124 | 123 | 123 | 122 | 120 |
| | Discharge amount | | kg/hr | 50 | 50 | 50 | 50 | 50 |
| | Die pressure | | MPa | 8.3 | 8.2 | 8.0 | 7.6 | 7.4 |
| Properties of Foam Insulation Board | Apparent density | | $kg/m^3$ | 35 | 35 | 35 | 35 | 35 |
| | Cross-sectional area | | $cm^2$ | 60 | 60 | 60 | 60 | 60 |
| | Thickness | | mm | 28 | 28 | 28 | 28 | 28 |
| | Closed cell content | | % | 93 | 94 | 95 | 94 | 94 |
| | Average cell diameter in thickness direction | | mm | 0.1 | 0.1 | 0.1 | 0.1 | 0.1 |
| | Average cell deformation ratio | | - | 1.0 | 1.0 | 1.0 | 1.0 | 1.0 |
| | Thermal conductivity after 100 days (A) | | W/m·K | 0.0287 | 0.0281 | 0.0277 | 0.0273 | 0.0269 |
| | Thermal conductivity after 200 days (B) | | W/m·K | 0.0290 | 0.0285 | 0.0280 | 0.0279 | 0.0276 |
| | B/A | | - | 1.0105 | 1.0142 | 1.0108 | 1.0220 | 1.0260 |
| | Appearance | | - | good | good | good | good | good |
| | Flame retardancy | | - | excellent | excellent | excellent | excellent | excellent |

Table 3

| Example | | | | 6 | 7 | 8 | 9 |
|---|---|---|---|---|---|---|---|
| Resin | Polystyrene resin | Type | - | PS1 | PS1 | PS2 | Heat resistant PS |
| | Flame retardand master batch | | parts by weight | 5 | 5 | 5 | 5 |
| | Cell controlling agent master batch | | parts by weight | 2.5 | 2.5 | 2.5 | 2.5 |
| Blowing agent | Feed amount per 1Kg base resin | HFO | mol/kg | 0.50 | 0.20 | 0.30 | 0.30 |
| | | i-Bu | mol/kg | 0.40 | 0.80 | 0.60 | 0.60 |
| | | Water | mol/kg | 0.30 | 0.20 | 0.30 | 0.30 |
| | | Total | mol/kg | 1.20 | 1.20 | 1.20 | 1.20 |
| | Composition | HFO | mol% | 42 | 17 | 25 | 25 |
| | | i-Bu | mol% | 33 | 67 | 50 | 50 |
| | | Water | mol% | 25 | 17 | 25 | 25 |
| | | Total | mol% | 100 | 100 | 100 | 100 |
| Production condition | Foaming Temperature of resin | | °C | 120 | 123 | 127 | 145 |
| | Discharge amount | | kg/hr | 50 | 50 | 50 | 50 |
| | Die pressure | | MPa | 7.8 | 8.6 | 8.6 | 8.1 |
| Properties of Foam Insulation Board | Apparent density | | kg/m$^3$ | 35 | 35 | 35 | 35 |
| | Cross-sectional area | | cm$^2$ | 60 | 60 | 60 | 60 |
| | Thickness | | mm | 28 | 28 | 28 | 28 |
| | Closed cell content | | % | 95 | 95 | 95 | 95 |
| | Average cell diameter in thickness direction | | mm | 0.1 | 0.1 | 0.1 | 0.1 |
| | Average cell deformation ratio | | - | 1.0 | 1.0 | 1.0 | 1.0 |
| | Thermal conductivity after 100 days (A) | | W/m·K | 0.0270 | 0.0278 | 0.0277 | 0.0276 |
| | Thermal conductivity after 200 days (B) | | W/m·K | 0.0276 | 0.0283 | 0.0280 | 0.0280 |
| | B/A | | - | 1.0222 | 1.0180 | 1.0108 | 1.0145 |
| | Appearance | | - | good | good | good | good |
| | Flame retardancy | | - | excellent | good | excellent | excellent |

Table 4

| Comparative Example | | | | 1 | 2 | 3 | 4 | 5 |
|---|---|---|---|---|---|---|---|---|
| Resin | Polystyrene resin | Type | - | PS1 | PS1 | PS1 | PS1 | PS1 |
| | Flame retardand master batch | | parts by weight | 5 | 5 | 5 | 5 | 5 |
| | Cell controlling agent master batch | | parts by weight | 2.5 | 2.5 | 2.5 | 2.5 | 2.5 |
| Blowing agent | Feed amount per 1Kg base resin | HFO | mol/kg | 0.02 | 0.70 | 0.10 | 0.40 | 0.20 |
| | | i-Bu | mol/kg | 0.68 | 0.41 | 0.41 | 0.30 | 0.90 |
| | | Water | mol/kg | 0.50 | 0.10 | 0.70 | 0.50 | 0.10 |
| | | Total | mol/kg | 1.20 | 1.20 | 1.20 | 1.20 | 1.20 |
| | Composition | HFO | mol% | 2 | 58 | 8 | 33 | 17 |
| | | i-Bu | mol% | 57 | 34 | 34 | 25 | 75 |
| | | Water | mol% | 42 | 8 | 58 | 42 | 8 |
| | | Total | mol% | 100 | 100 | 100 | 100 | 100 |
| Production condition | Foaming Temperature of resin | | °C | 125 | 125 | 125 | 125 | 125 |
| | Discharge amount | | kg/hr | 50 | 50 | 50 | 50 | 50 |
| | Die pressure | | MPa | 8.9 | 7.0 | 8.5 | 7.3 | 6.9 |
| Properties of Foam Insulation Board | Apparent density | | $kg/m^3$ | 35 | 38 | - | 39 | 35 |
| | Cross-sectional area | | $cm^2$ | 60 | 60 | - | 60 | 60 |
| | Thickness | | mm | 28 | 28 | - | 28 | 28 |
| | Closed cell content | | % | 93 | 79 | - | 92 | 93 |
| | Average cell diameter in thickness direction | | mm | 0.1 | 0.1 | - | 0.1 | 0.1 |
| | Average cell deformation ratio | | - | 1.0 | 1.0 | - | 1.0 | 1.0 |
| | Thermal conductivity after 100 days (A) | | W/m·K | 0.0292 | 0.0294 | - | 0.0284 | 0.0278 |
| | Thermal conductivity after 200 days (B) | | W/m·K | 0.0293 | 0.0308 | - | 0.0289 | 0.0283 |
| | B/A | | - | 1.0034 | 1.0476 | - | 1.0176 | 1.0180 |
| | Appearance | | - | good | poor | poor | poor | good |
| | Flame retardancy | | - | excellent | excellent | excellent | excellent | poor |

The following facts are appreciated from the results shown in Tables 2 to 4.

(1) As is apparent from the results shown in Examples 1 to 5, the thermal conductivity tends to decrease as the content of HFO in the mixed blowing agent increases. When the content of HFO in the mixed blowing agent is excessively increased beyond the range specified in the present invention as in Comparative Example 2, not only the thermal conductivity considerably decreases but also the closed cell content becomes low so that the appearance is poor. On the other hand, when the content of HFO in the mixed blowing agent is lower than the lower limit specified in the present invention as in Comparative Example 1, a heat-insulating foam board having good long-term heat-insulating properties cannot be obtained as is clear from the fact that the thermal conductivity already exceeded 0.029 W / m·K of 100 days after the production.

(2) Comparison between Examples 3 and 6 shows that the heat-insulating foam board of Example 6 is superior in long-term excellent heat-insulating properties to that of Example 3 because the content of HFO in the mixed blowing agent in Example 6 is relatively higher than in Example 3. Example 7 is contrasted with Example 2, and the heat-insulating foam board of Example 7 has slightly lower flame retardancy than that of Example 2 because the content of isobutane is greater in Example 7 than in Example 2. Example 8 and Example 9 are contrasted with Example 3 to compare Examples using different types of base resins.

(3) When the content of water in the mixed blowing agent exceeds the range specified in the present invention as in Comparative Example 3, the heat-insulating foam board has poor appearance and a good heat-insulating foam board cannot be obtained. When the content of isobutane in the mixed blowing agent is lower than the range specified in the present invention as in Comparative Example 4, the stability during extrusion foaming is poor and the resulting heat-insulating foam board has poor appearance. On the other hand, when the content of isobutane in the mixed blowing agent exceeds the range specified in the present invention as in Comparative Example 5, the flame retardancy considerably decreases.

**Claims**

1. A method for producing an extruded heat-insulating foam board having a thickness of 10 to 150 mm, an apparent density of 20 to 50 kg/m$^3$ and a closed cell content of at least 80%, comprising extruding a foamable resin melt containing a base resin composed primarily of a polystyrene resin, a physical blowing agent and a flame retardant, wherein 3 to 50 mol% of a hydrofluoroolefin, 30 to 70 mol% of a saturated hydrocarbon having 3 to 5 carbon atoms, and 5 to 50 mol% of water and / or carbon dioxide (where the sum of the contents of the hydrofluoroolefin, saturated hydrocarbon having 3 to 5 carbon atoms, water and/or carbon dioxide is 100 mol%) are used as the physical blowing agent.

2. The method for producing an extruded polystyrene resin heat-insulating foam board according to Claim 1, wherein the sum of the amounts of the hydrofluoroolefin and the saturated hydrocarbon having 3 to 5 carbon atoms is 0.4 to 2 moles per 1 kg of the base resin, and the sum of the amounts of the water and / or carbon dioxide is 0.05 to 0.6 moles per 1 kg of the base resin.

3. The method for producing an extruded polystyrene resin heat-insulating foam board according to Claim 1, wherein the hydrofluoroolefin is a tetrafluoropropene.

4. The method for producing an extruded polystyrene resin heat-insulating foam board according to Claim 1, wherein the hydrofluoroolefin (HFO) is at least one selected from the group consisting of trans-1,3,3,3-tetrafluoropropene (trans-HFO-1234ze), cis-1,3,3,3-tetrafluoropropene (cis-HFO-1234ze) and 2,3,3,3-tetrafluoropropene (HFO-1234yf).

Europäisches
Patentamt

European
Patent Office

Office européen
des brevets

# EUROPEAN SEARCH REPORT

Application Number

EP 13 15 8154

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2010/087555 A1 (VO VAN-CHAU [FR] ET AL) 8 April 2010 (2010-04-08) <br> * paragraph [0018] * <br> * examples 1,2,5,6 * <br> * claim 9 * <br> & JP 2010 522808 A <br> 8 July 2010 (2010-07-08) <br> * the whole document * | 1 | INV. <br> C08J9/12 <br> C08J9/14 <br><br> ADD. <br> C08L25/06 <br> C08L25/14 |
| A | US 2010/016457 A1 (BOWMAN JAMES M [US] ET AL) 21 January 2010 (2010-01-21) <br> * examples 6-8 * | 1-4 | |
| A | US 2011/288192 A1 (VAN HORN BRETT L [US]) 24 November 2011 (2011-11-24) <br> * example 11 * <br> * claims 1,3,8,10,13,15 * | 1-4 | |
| A | DE 10 2010 011966 A1 (JACKEN INSULATION GMBH [DE]) 22 September 2011 (2011-09-22) <br> * paragraphs [0032] - [0033] * <br> * claims 2,4,5 * | 1-4 | TECHNICAL FIELDS SEARCHED (IPC) <br><br> C08J <br> C08L |

The present search report has been drawn up for all claims

| Place of search | Date of completion of the search | Examiner |
|---|---|---|
| Munich | 17 May 2013 | Friebe, Lars |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 13 15 8154

This annex lists the patent family members relating to the patent documents cited in the above-mentioned European search report.
The members are as contained in the European Patent Office EDP file on
The European Patent Office is in no way liable for these particulars which are merely given for the purpose of information.

17-05-2013

| Patent document cited in search report | Publication date | Patent family member(s) | | Publication date |
|---|---|---|---|---|
| US 2010087555 A1 | 08-04-2010 | CA | 2682076 A1 | 02-10-2008 |
| | | CN | 101646724 A | 10-02-2010 |
| | | EP | 2132257 A2 | 16-12-2009 |
| | | JP | 2010522808 A | 08-07-2010 |
| | | RU | 2009139639 A | 10-05-2011 |
| | | TW | 200902609 A | 16-01-2009 |
| | | US | 2010087555 A1 | 08-04-2010 |
| | | WO | 2008118627 A2 | 02-10-2008 |
| US 2010016457 A1 | 21-01-2010 | US | 2010016457 A1 | 21-01-2010 |
| | | US | 2012283339 A1 | 08-11-2012 |
| US 2011288192 A1 | 24-11-2011 | CA | 2750651 A1 | 05-08-2010 |
| | | CN | 102300952 A | 28-12-2011 |
| | | EP | 2391691 A1 | 07-12-2011 |
| | | JP | 2012516381 A | 19-07-2012 |
| | | US | 2011288192 A1 | 24-11-2011 |
| | | WO | 2010088320 A1 | 05-08-2010 |
| DE 102010011966 A1 | 22-09-2011 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010522808 A